# EUROPEAN PATENT APPLICATION

(11) **EP 1 243 295 A2**
(43) Date of publication of application: **25.09.2002**
(21) Application number: 02000692.0
(22) Date of filing: 11.01.2002
(51) Int. Cl.: A63F 13/02

(54) **Auxiliary item for use with a portable games machine**

(30) Priority: 19.03.2001 JP 2001077913
(71) Applicant: SUNSEIBU ENTERTAINMENT, LTD., Shizuoka-shi, Shizuoka-ken (JP)
(72) Inventor: Soga, Kiyoshi, Shizuoka-shi, Shizuoka-ken (JP)
(74) Representative: Hinkelmann, Klaus

(57) **Abstract**

There is provided an auxiliary item for use in a portable games machine which makes it functionally easier to use, whereby the screen of a handy type games machine is easier to view, and whereby playing in dark locations can be achieved. The auxiliary item comprises: an auxiliary item body (2) including one or more projections (1a, 1b, 1c) for detachable mounting on the portable games machine; a lens (3) provided on the auxiliary item body, for magnifying the display screen of the portable games machine; a freely rotatable rotary plate (4) provided on the auxiliary item body; and an illumination device (5) provided at the edge of the rotary plate, for illuminating the display screen of the portable games machine. The rotary plate can assume at least a first accommodated condition and a second erected condition. The lens is accommodated in an aperture provided (6) in the rotary plate in the first condition so that the screen can be viewed through the lens and, in the second condition, the display screen of the portable games machine being illuminated by the illumination device.

## Description

### BACKGROUND OF THE INVENTION

### 1. Field of the Invention

The present invention relates to an auxiliary item for use by mounting on a portable games machine or desktop electronic computer etc (herein below referred to generally as " portable games machines" ) whereby the screen is enlarged or illumination is directed onto the screen.

### 2. Description of the Related Art

With the spread of domestic games machines in recent years, "handy type" games machines have appeared. Since such games machines are palm-sized, the size of the screen is small and there is considerable load on the eyes when playing for a long time. Also, since games machines of this type have a liquid crystal screen, they could not be used in dark locations.

A conventional auxiliary item for this type of use is disclosed in Japanese Utility Model Publication No. 2525699.

However, in this item for such conventional use, a lens separated from the main body was employed in order to magnify the screen and the liquid crystal display, which is the most important part of the portable games machine, could not be protected.

### SUMMARY OF THE INVENTION

The present invention was made in view of the above background, its object being to provide an auxiliary item for use in a portable games machine which should be functionally easier to use, whereby the screen of a handy type games machine should be easier to view, and whereby playing in dark locations can be achieved.

An auxiliary item for use with a portable games machine according to the present invention comprises: an auxiliary item body including one or a plurality of projections for detachable mounting on the portable games machine; a lens provided on said auxiliary item body that magnifies the display screen of said portable games machine; a freely rotatable rotary plate provided on said auxiliary item body; and an illumination device provided at the edge of said rotary plate and that illuminates the display screen of said portable games machine wherein said rotary plate can assume at least a first accommodated condition and a second erected condition, said lens being accommodated in an aperture provided in said rotary plate in said first condition so that the screen can be viewed through said lens and the display screen of said portable games machine being illuminated by said illumination device in said second condition.

This auxiliary item for use can be mounted on the portable games machine by a one-touch operation. In the first condition (closed condition), it is in a compact condition and makes it possible to view the screen in magnified fashion. In a dark location, by putting it into the second condition (open condition) in which rotary plate (2) is pulled up, when the illumination (5) is lit by turning on switch (S), the screen is illuminated. The display screen of the reflective type liquid crystal panel becomes clear and bright, so that the game can be enjoyed with good illumination anywhere.

### BRIEF DESCRIPTION OF THE DRAWINGS

Figure 1 is a perspective view (in opened-out condition) of an auxiliary item for use according to an embodiment of the present invention;
Figure 2 is a front view of an auxiliary item for use according to an embodiment of the present invention;
Figure 3 is a rear view of an auxiliary item for use according to an embodiment of the present invention;
Figure 4 is a right side view of an auxiliary item for use according to an embodiment of the present invention;
Figure 5 is a perspective view (in closed condition) of an auxiliary item for use according to an embodiment of the present invention;
Figure 6 is a plan view of an auxiliary item for use according to an embodiment of the present invention;
Figure 7 is a bottom view of an auxiliary item for use according to an embodiment of the present invention;
Figure 8 is a perspective view (in closed condition) showing the condition of use of an auxiliary item for use according to an embodiment of the present invention; and
Figure 9 is a perspective view (in open condition) showing the condition of use of an auxiliary item for use according to an embodiment of the present invention.

### DESCRIPTION OF THE PREFERRED EMBODIMENTS

An auxiliary item for use according to an embodiment of the present invention is described below with reference to the drawings.

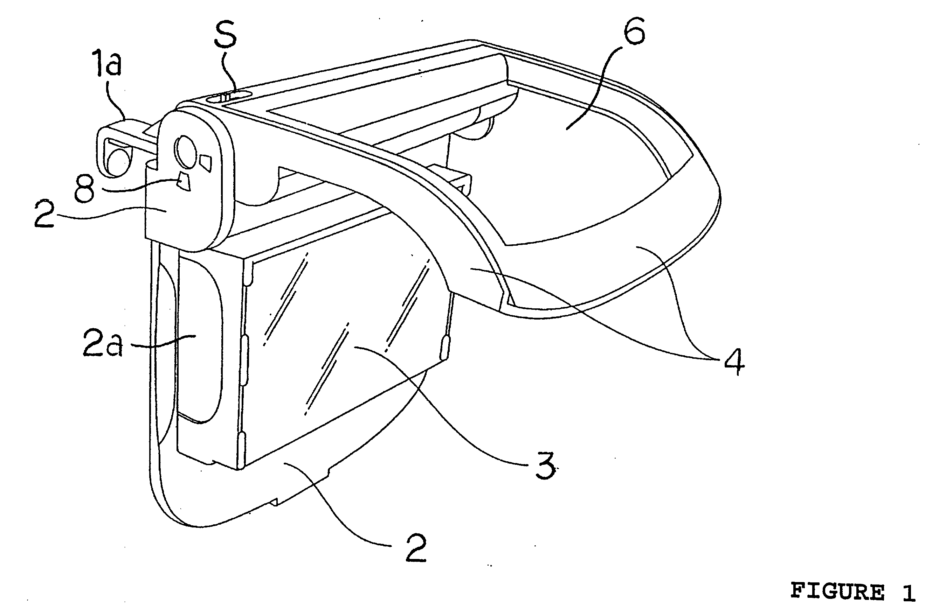

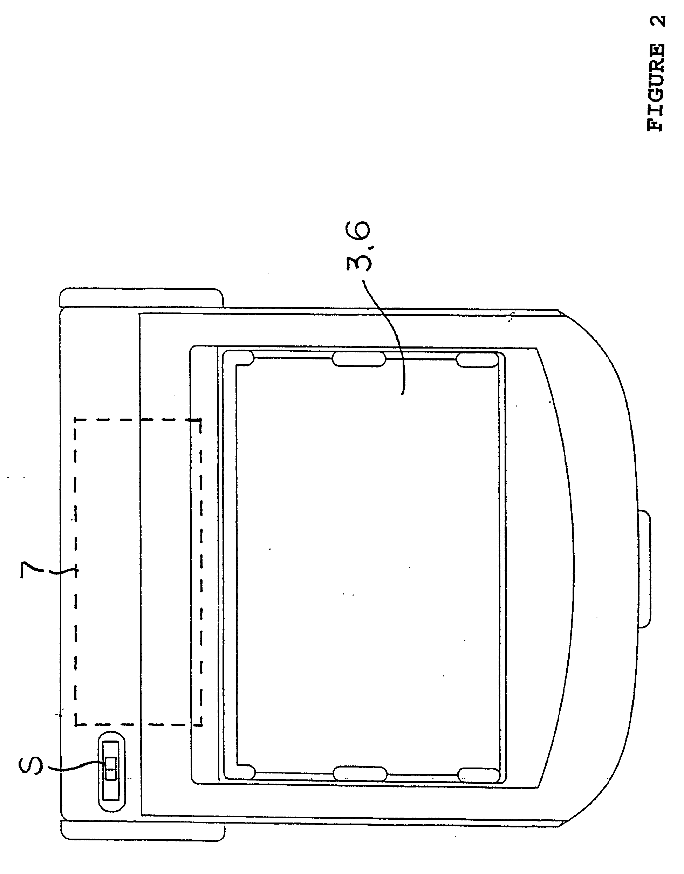

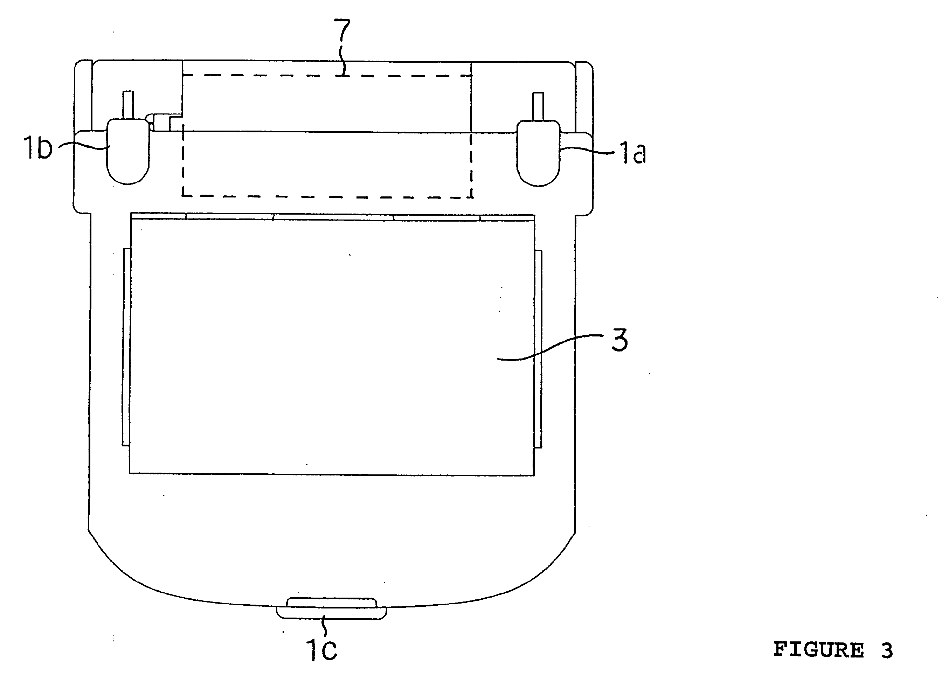

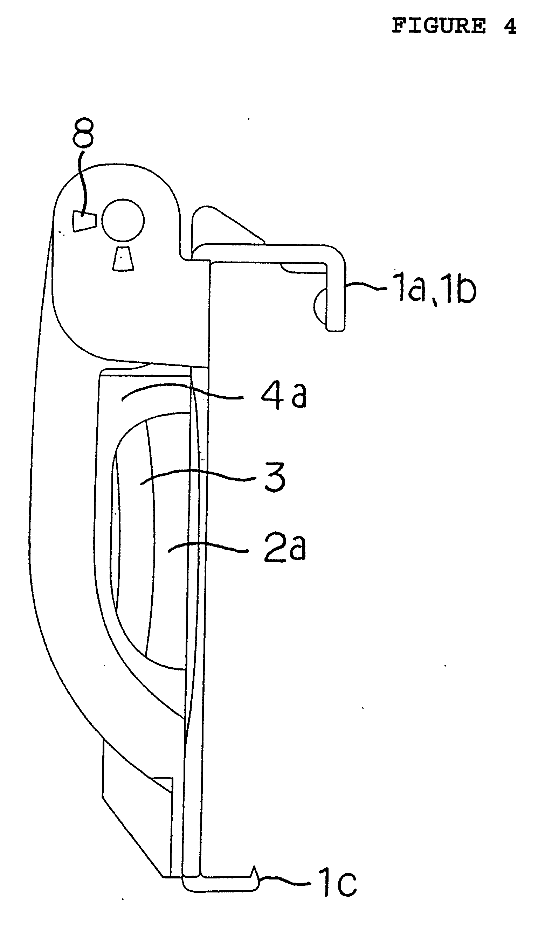

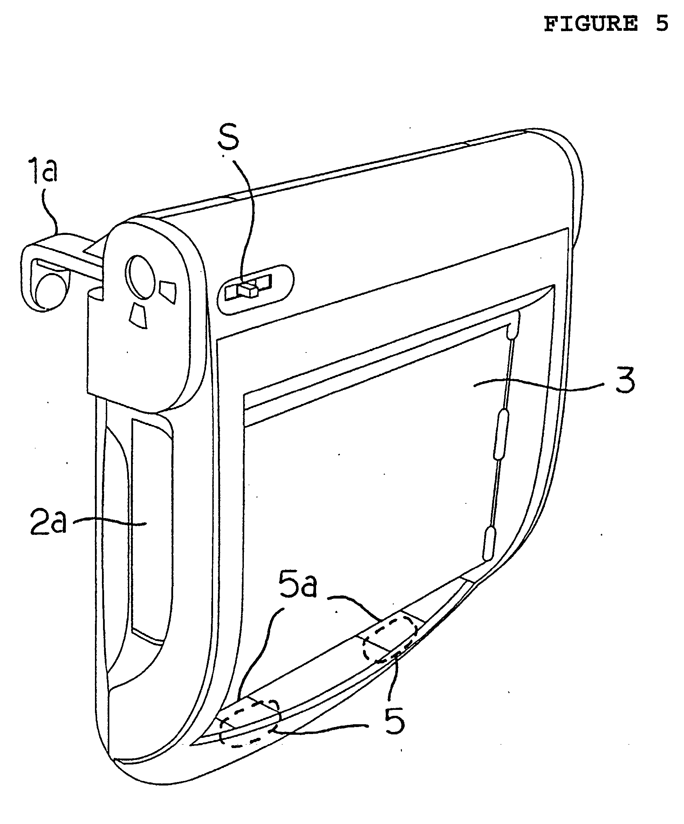

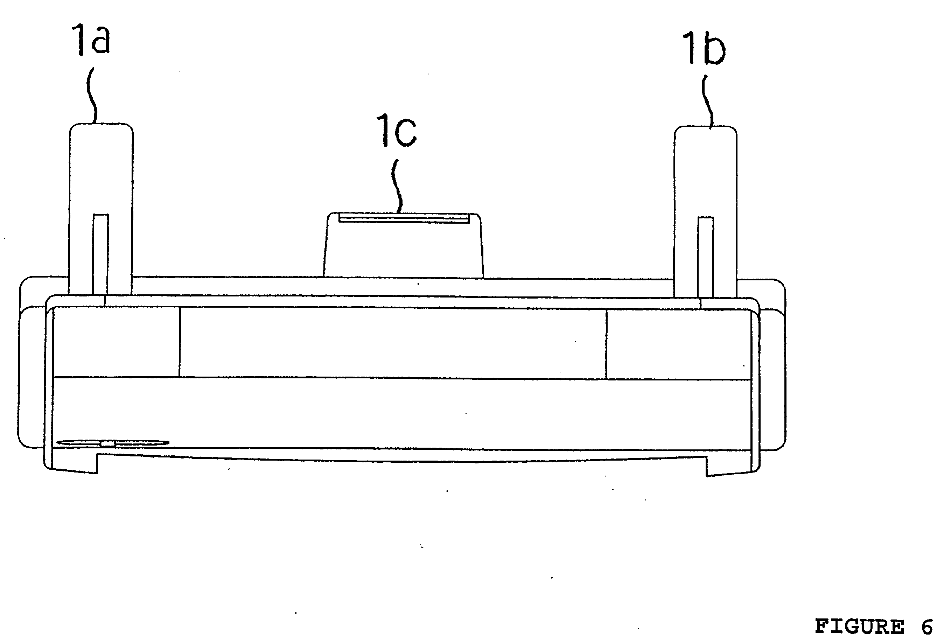

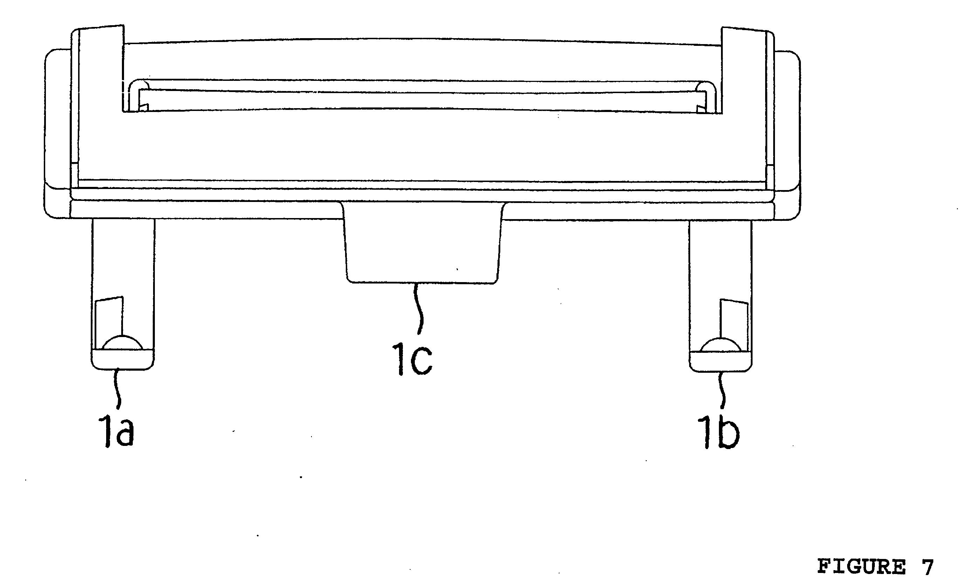

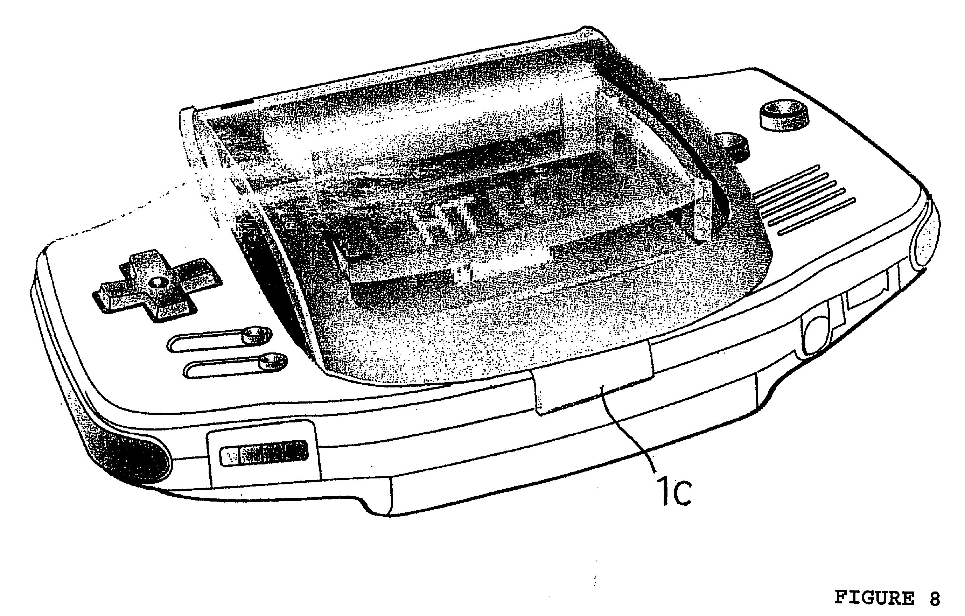

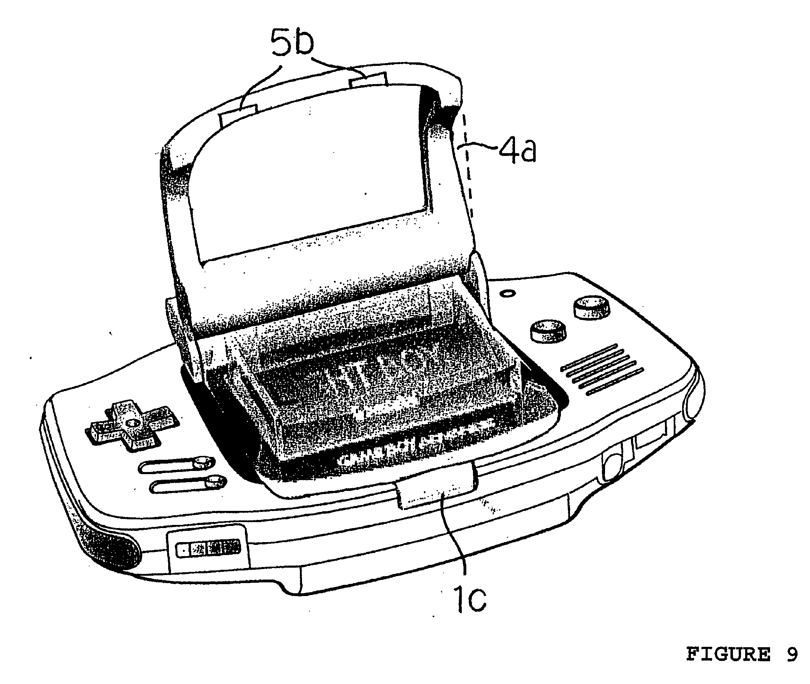

Figure 1 is a perspective view (in opened-out condition) of an auxiliary item for use according to an embodiment of the present invention. Figure 2 is a front view of an auxiliary item for use according to an embodiment of the present invention. Figure 3 is a rear view of an auxiliary item for use according to an embodiment of the present invention. Figure 4 is a right side view of an auxiliary item for use according to an embodiment of the present invention. Figure 5 is a perspective view (in closed condition) of an auxiliary item for use according to an embodiment of the present invention. Figure 6 is a plan view of an auxiliary item for use according to an embodiment of the present invention. Figure 7 is a bottom view of an auxiliary item for use according to an embodiment of the present invention. Figure 8 is a perspective view (in closed condition) showing the condition of use of an auxiliary item for use according to an embodiment of the present invention. Figure 9 is a perspective view (in open condition) showing the condition of use of an auxiliary item for use according to an embodiment of the present invention. Figure 8 and Figure 9 show the condition in which this auxiliary item for use is mounted on a portable games machine body.

This auxiliary item for use comprises: an auxiliary item body (2) including one or more projections (1a, 1b, 1c) for detachable mounting on a portable games machine; a lens (3) for magnifying the display screen of the portable games machine, mounted on this auxiliary item body, and a freely rotatable rotary plate (4) mounted on this auxiliary item body, and illumination devices (5) for illuminating the display screen of the portable games machine provided at the edge of the rotary plate.

This rotary plate can assume two conditions, namely, a first, accommodated condition (Figure 5 and Figure 8) and a second, erected condition (Figure 1 and Figure 9). In the first condition, a lens is accommodated in an aperture (6) provided in the rotary plate, so that the screen can be viewed through the lens. In the second condition, the display screen of the portable games machine is illuminated by the illuminating devices (5).

As shown in Figure 2 and Figure 3, a battery (7) for the illumination devices is provided in the vicinity of the rotational center of the rotary plate.

Lens (3) is provided over the entire display screen of the portable games machine. The size of this lens is substantially the same as the liquid crystal display device of the portable games machine and it is fixed firmly in the auxiliary item body (2). Auxiliary item body (2) firmly holds the portable games machine by means of projections (1), so that there is no possibility of this coming loose during use or the positions of the lens (3) and the liquid crystal display device becoming offset from each other. The area magnification ratio of this lens (3) is about 1.2 times i.e. it is powerful and fully satisfactory in giving a wide magnification of the screen.

Auxiliary item body (2) is made of transparent material, so that it can direct external light onto the display screen of the portable games machine. It consists of a polycarbonate body that protects the liquid crystal screen.

Transparent sections (5a, 5b) on two faces are provided in the vicinity of the illuminating devices (5), whereby the illumination of the illumination devices is directed to the display screen of the portable games machine. Transparent sections (5a) are provided on the edge of rotary plate (4) facing towards its inside (side facing aperture 6). Transparent sections (5a) direct the light substantially directly downwards when rotary plate (4) is pulled upwards. Transparent sections (5b) are provided in a plane at right angles to transparent sections (5a) and unlike transparent sections (5a) are not provided over the entire face but only in part thereof. These are provided in order to direct the illuminating light at an angle with respect to the screen of the portable games machine and in order that the illuminating light should not directly strike the eyes of the players.

Recesses (2a) are provided in the side faces of the auxiliary item body (2) and recesses (4a) are provided in the side faces of the rotary plate. These recesses are provided in order to avoid obstruction to the movement of the fingers when operating the keys.

A part (1a, 1b) of projections of the auxiliary item body engage screw holes of the portable games machine, while the other part thereof (1c) engages a gap of the components of the portable games machine. Projections 1a and 1b are U-shaped, the U portions clamping the portable games machine from above and below, while hemispherical convex portions provided at the tip of projections 1a, 1b fit into the screw holes, thereby firmly holding the auxiliary item body on the portable games machine. A linear convex portion is provided at the tip of projection 1c. This convex portion fits into a gap of the case of the portable games machine (slight gap between the plurality of components of which the case is constructed), so as to firmly fix the auxiliary item body on the portable games machine.

Rotation stops (8) are provided in the vicinity of the center of rotation of the rotary plate; these rotation stops include a convex portion provided on the rotary plate and a concave portion provided on the auxiliary item body that engages therewith, these concave portions and convex portions being substantially fan-shaped.

This auxiliary item for use can be mounted on a portable games machine by a one-touch operation. In dark locations, by pulling up rotary plate (4) and turning switch (S) on, the illumination (5) is lit, and the screen is illuminated. The display screen of the reflective type liquid crystal panel becomes bright, making it possible to enjoy the game anywhere with full illumination. Also, since an aperture (6) is provided in rotary plate (4), play is still possible even when this is shut.

Also the design of this auxiliary item for use is a stylish design that appears unitary with the main body.

The present invention is not restricted to the above embodiment but can be modified in various ways within the scope of the invention as set out in the claims; such modifications are of course included within the scope of the present invention.

As described above, with this invention, the screen can be viewed through the lens, and the display screen of the portable games machine is illuminated by the illumination devices, so the screen of a handy type games machine is made easier to view and it becomes possible for it to be played with even in dark locations.

Also, since the batteries for the illumination devices are provided in the vicinity of the center of rotation of the rotary plate, opening and closing of the rotary plate can be performed easily and the position of the center of gravity is low and close to the portable games machine, stabilizing the condition of the auxiliary item for use. Since the weight of the batteries represents the largest proportion within this auxiliary item for use, the position of the batteries in accordance with the present invention is important and beneficial.

Also, since the lens is provided over the entire display screen of the portable games machine, it is capable of protecting the display screen of the portable games machine.

Also, since the auxiliary item is of transparent material which directs external light onto the display screen of the portable games machine, even when no illumination is employed, the game screen is made easier to view.

Also, since transparent sections on two faces whereby the illumination of the illumination devices is directed onto the display screen of the portable games machine are provided in the vicinity of the illumination devices, the illuminating light is directed onto the portable games machine at an angle. Consequently, since the light is reflected along the line of vision of the user, the game screen becomes easy to view. Furthermore, since the illuminating light cannot directly enter the eyes of the user, this prevents the user's eyes becoming tired.

Also, since recesses are provided on the side faces of the auxiliary item body, and recesses are provided on the side faces of the rotary plate, this auxiliary item for use cannot obstruct key operation by the user.

Also, since a part of the projections of the auxiliary item body engage screw holes of the portable games machine and the other part thereof engages a gap between components of the portable games machine, this auxiliary item for use can hold the portable games machine in stable fashion.

Also, since rotation stops are provided in the vicinity of the center of rotation of the rotary plate and these rotation stops include a convex portion provided on the rotary plate and a concave portion that engages therewith provided on the auxiliary item body, the convex portions and concave portions being substantially fan-shaped, there is little play of the stops and the rotary plate is stabilized. Also, the operating feel is excellent.

The present invention can be summarized as follows:

There is provided an auxiliary item for use in a portable games machine which makes it functionally easier to use, whereby the screen of a handy type games machine is easier to view, and whereby playing in dark locations can be achieved. The auxiliary item comprises: an auxiliary item body (2) including one or more projections (1a, 1b, 1c) for detachable mounting on the portable games machine; a lens (3) provided on the auxiliary item body, for magnifying the display screen of the portable games machine; a freely rotatable rotary plate (4) provided on the auxiliary item body; and an illumination device (5) provided at the edge of the rotary plate, for illuminating the display screen of the portable games machine. The rotary plate can assume at least a first accommodated condition and a second erected condition. The lens is accommodated in an aperture provided (6) in the rotary plate in the first condition so that the screen can be viewed through the lens and, in the second condition, the display screen of the portable games machine being illuminated by the illumination device.

## Claims

1. An auxiliary item for use with a portable games machine comprising: an auxiliary item body (2) including one or a plurality of projections (1a, 1b, 1c) for detachable mounting on the portable games machine; a lens (3) provided on said auxiliary item body (2), for magnifying the display screen of said portable games machine; a freely rotatable rotary plate (4) provided on said auxiliary item body (2); and an illumination device (5) provided at the edge of said rotary plate (4) and that illuminates the display screen of said portable games machine,
wherein said rotary plate (4) can assume at least a first accommodated condition and a second erected condition, said lens (3) being accommodated in an aperture (6) provided in said rotary plate (4) in said first condition so that the screen can be viewed through said lens (3), and the display screen of said portable games machine being illuminated by said illumination device (5) in said second condition.

2. The auxiliary item for use with a portable games machine according to claim 1, wherein a battery (7) for said illumination device (5) is provided in the vicinity of the center of rotation of said rotary plate (4).

3. The auxiliary item for use with a portable games machine according to claim 1, wherein said lens (3) is provided extending over the entire display screen of said portable games machine.

4. The auxiliary item for use with a portable games machine according to claim 1, wherein said auxiliary item body (2) is of transparent material and directs external light onto the display screen of said portable games machine.

5. The auxiliary item for use with a portable games machine according to claim 1, wherein transparent sections (5a, 5b) on two faces are provided in the vicinity of said illumination device (5) for directing the illumination of said illumination device (5) obliquely onto the display screen of said portable games machine.

6. The auxiliary item for use with a portable games machine according to claim 1, wherein a recess (2a) is provided in each side face of said auxiliary item body (2) and a recess (4a) is provided in each side face of said rotary plate (4).

7. The auxiliary item for use with a portable games machine according to claim 1, wherein a part (1a, 1b) of said projections of the auxiliary item body (2) fits into a screw hole of said portable games machine and the other part thereof (1c) fits into a gap between components of said portable games machine.

8. The auxiliary item for use with a portable games machine according to claim 1 wherein a rotation stop (8) is provided in the vicinity of the center of rotation of said rotary plate (4), said rotation stop (8) including a convex portion provided on said rotary plate (4) and a concave portion that engages therewith and is provided on said auxiliary item body (2), said convex portions and concave portions being substantially fan-shaped.
